# FASCICULE DE BREVET EUROPEEN

(11) **EP 2 613 976 B1**
(45) Date de publication et mention de la délivrance du brevet: **29.11.2017**
(21) Numéro de dépôt: 11738752.2
(22) Date de dépôt: 03.08.2011
(51) Int. Cl.: B60S 1/38, B60S 1/52

(54) **DISPOSITIF DE SOLIDARISATION D'UNE LAME SUR UN BALAI D'ESSUYAGE**
VERFAHREN ZUR FIXIERUNG EINES BLATTES AN EINEM WISCHER
METHOD FOR SECURING A BLADE ONTO A WIPER

(30) Priorité: 09.09.2010 FR 1003596
(43) Date de publication de la demande: 17.07.2013
(73) Titulaire: Valeo Systèmes d'Essuyage, 78322 Le Mesnil Saint Denis (FR)
(72) Inventeur: ESPINASSE, Philippe, F-63114 Coudes (FR)
(74) Mandataire: Callu Danseux, Violaine
(86) Numéro de dépôt international: PCT/EP2011/063396
(87) Numéro de publication internationale: WO 2012/031838

(56) Documents cités:
- DE-A1- 10 000 373
- FR-A1- 2 920 729
- US-A1- 2008 289 134

## Description

Le domaine de la présente invention est celui des équipements pour les véhicules, et plus particulièrement celui des équipements pour l'essuyage des vitrages des automobiles.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans les deux solutions, le balai est rattaché au bras tournant de l'essuie-glace par un ensemble constitué d'un connecteur et d'un adaptateur.

Dans le cas où la qualité de l'essuyage se dégrade, il devient alors nécessaire de renouveler le moyen d'essuyage. Il existe deux solutions : la première consiste en un remplacement de l'intégralité du balai par un balai neuf alors que la deuxième solution consiste en un remplacement de la lame racleuse tout en conservant le reste du balai.

L'invention concerne plus particulièrement cette seconde solution, connue du document US 2008/289134 A1, qui impose le démontage d'une extrémité du balai pour accéder à la lame racleuse.

Par ailleurs, les essuie-glaces sont également équipés de dispositifs d'amenée d'un liquide lave-vitre qui est acheminé depuis un réservoir situé sur le véhicule et qui est pulvérisé en direction du pare-brise par des buses situées soit autour du pare-brise, soit sur l'essuie-glace lui-même pour une meilleure distribution du liquide.

L'inconvénient de cette seconde situation dans le cas où seule la lame racleuse est remplacée réside dans le fait que le dispositif d'amenée de liquide se trouve ouvert et provoque ainsi une fuite.

Un autre inconvénient d'une telle situation réside dans la difficulté de remplacer une telle lame racleuse. En effet, il convient de disposer de solution la plus ergonomique possible pour remplacer la lame et on comprend que la présence d'un liquide au niveau de zone de manipulation complique le remplacement de la lame et le bon remontage de celle-ci. Par ailleurs, la pression résiduelle à l'intérieur du dispositif d'amenée de liquide peut provoquer des projections de liquide sur l'utilisateur qu'il convient d'éviter.

Le but de la présente invention est donc de résoudre les inconvénients décrits ci-dessus principalement en obstruant le dispositif d'amenée de liquide tout en autorisant un démontage aisé de la lame racleuse par rapport au support du balai d'essuyage.

L'invention a donc pour objet un dispositif de solidarisation entre une lame et un support constitutifs d'un balai d'essuyage, comprenant un première partie apte à être fixée sur le support et une deuxième partie apte à être fixée sur la lame, la première partie et la deuxième partie sont reliées par un moyen de fixation amovible, la deuxième partie comprenant un corps solidaire de la lame, ledit dispositif de solidarisation étant caractérisé en ce que la première partie comprend au moins un moyen d'obturation apte à boucher au moins un dispositif de canalisation d'un liquide constitutif du balai, en ce que le moyen de fixation amovible est constitué par deux bras flexibles qui prennent naissance sur le corps et au bout desquels est formé un moyen de retenue sur la première partie, et en ce qu'au moins un bras présente une excroissance qui se loge dans un trou pratiqué dans la lame.

Selon une première caractéristique de l'invention, la lame et le support s'étendent selon un axe longitudinal du balai d'essuyage, le dispositif de canalisation du liquide étant constitué par deux conduits disposés de part et d'autre du support.

Selon une deuxième caractéristique de l'invention, les conduits sont formés de manière unitaire avec un déflecteur d'air.

Selon une autre caractéristique de l'invention, la première partie comprend un logement qui reçoit une extrémité du dispositif de canalisation du liquide.

Selon encore une caractéristique de l'invention, le moyen d'obturation comprend un téton qui pénètre à l'intérieur du dispositif de canalisation du liquide, avantageusement à l'intérieur des conduits, pour le boucher.

Selon encore une autre caractéristique de l'invention, la première partie comprend un moyen de verrouillage de cette première partie sur le support.

Avantageusement, la deuxième partie comprend un corps solidaire de la lame, par exemple par enfilement de la lame, le moyen de fixation amovible étant constitué par deux bras flexibles qui prennent naissance sur le corps, de manière latérale ou extrémale par rapport à la deuxième partie, et au bout desquels est formé un moyen de retenue sur la première partie. Ces bras flexibles s'étendent ainsi dans un plan parallèle au plan formé par le support.

Selon une première caractéristique de l'invention, la première partie comprend deux déformations latérales avec lesquelles chaque moyen de retenu coopère.

Selon une deuxième caractéristique de l'invention, le moyen de fixation amovible est formé par au moins un doigt flexible qui débouche à l'extrémité de la première partie et qui coopère avec une arête pratiquée dans la deuxième partie.

L'invention couvre également un balai d'essuyage comprenant une lame et un support et dans lequel la lame est solidarisée sur le support par un dispositif selon l'une quelconque des caractéristiques évoquées ci-dessus.

Un tout premier avantage selon l'invention réside dans la possibilité de remplacer la lame du balai d'essuyage sans ouvrir le circuit d'amenée de liquide lave-vitre.

Un autre avantage non négligeable réside dans le fait qu'un tel remplacement est particulièrement simple à effectuer puisque la deuxième partie reliée à la lame peut-être extraite de la première partie sans la présence de liquide susceptible de compliquer cette extraction. Par ailleurs, le remplacement de la lame est effectué en milieu sec, ce qui évite toute projection de liquide sur l'utilisateur au moment du montage et du démontage de la lame.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'une extrémité d'un balai d'essuyage équipée du dispositif selon l'invention,
- la figure 2 est une vue de dessous illustrant le dispositif selon l'invention et le support du balai,
- la figure 3 est une vue en éclatée du dispositif selon l'invention et du dispositif de canalisation du liquide,
- la figure 4 est une vue en perspective de la première partie du dispositif selon l'invention,
- la figure 5 est une vue en perspective de la deuxième partie du dispositif selon l'invention,
- la figure 6 est une vue de dessous illustrant une phase d'approche de la deuxième partie vers la première partie du dispositif selon l'invention,
- la figure 7 est une vue de dessous illustrant une phase de solidarisation de la deuxième partie dans la première partie du dispositif selon l'invention,
- la figure 8 est une vue de dessous illustrant la phase de solidarisation de la deuxième partie dans la première partie selon une première variante,
- la figure 9 est une vue de dessous illustrant une phase de solidarisation de la deuxième partie dans la première partie réalisées selon une deuxième variante.

Il faut noter que les figures exposent l'invention de manière détaillée pour mettre en oeuvre l'invention, lesdites figures pouvant bien entendu servir à mieux définir l'invention le cas échéant.

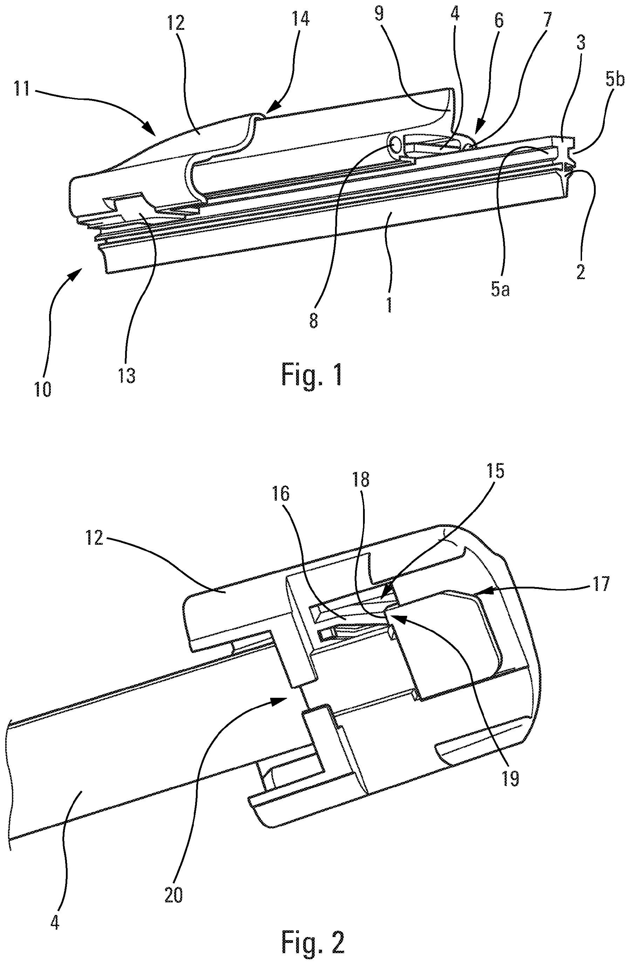

La figure 1 montre de manière partielle un balai d'essuyage équipant un système d'essuyage monté sur un véhicule automobile. Ce balai est installé sur le pare-brise avant mais il peut également être monté sur la vitre arrière du véhicule.

Ce balai s'étend sur la longueur selon un axe longitudinal. Le balai comprend une lame 1 constituée d'une zone de frottement 2 sur le vitrage et d'une zone de fixation 3 qui assure la liaison mécanique avec un support 4 constitutif du balai.

Ce support est autrement appelé vertèbre et il assure le maintien mécanique des différents composants qui constituent le balai. A titre d'exemple, il s'agit d'une baguette métallique unique qui s'étend selon l'axe longitudinal et qui présente au repos une courbure convexe par rapport au pare-brise. Cette baguette présente une flexibilité déterminée, qui en se déformant quand le balai est appliqué sur le pare-brise, provoque un effort réparti sur le long du balai d'essuyage.

La zone de fixation 3 comprend deux gorges 5a et 5b pratiquées sur des flans latéraux de la zone de fixation 3. Ces deux gorges coopèrent avec des griffes (non représentées) solidaires ou issues du support 4 de sorte à maintenir la lame contre le support tout en autorisant une translation de cette lame 1 par rapport au support 4.

Le balai d'essuyage est pourvu d'un dispositif de canalisation d'un liquide 6 qui est rendu solidaire du support 4, par exemple par clippage, collage ou plus généralement par coopération de formes. Le dispositif de canalisation du liquide se présente notamment sous la forme d'au moins deux conduits 7 et 8 qui s'étendent longitudinalement le long du balai. Plus précisément, ces conduits 7 et 8 sont disposés sur les côtés du support 4 et dans le prolongement du plan dans lequel s'étend le support 4. Ce dispositif de canalisation de liquide 6 est fabriqué à partir d'un matériau flexible, par exemple un caoutchouc ou un élastomère.

Ce dispositif de canalisation du liquide 6 peut être formé conjointement avec un déflecteur d'air 9 dont la fonction est d'augmenter la force d'appui du balai sur le pare-brise au bénéfice de l'effet aérodynamique de l'air. Dans cet exemple de réalisation, le déflecteur d'air 9 et le dispositif de canalisation 6, particulièrement les deux conduits 7 et 8, sont moulés à partir d'un même matériau flexible tel qu'un caoutchouc ou un élastomère. Le déflecteur d'air 9 et le dispositif de canalisation 6 forment ainsi une seule et unique pièce.

A l'extrémité 10 du balai est installé un dispositif de solidarisation 11 entre la lame 1 et le support 4. Par solidarisation, il faut ici comprendre un moyen de bloquer la translation de la lame 1 vis-à-vis du support 4. Ainsi, une fois que le dispositif de solidarisation est en place, tout mouvement en translation de la lame est interdit ce qui garantit une parfaite fixation de cette dernière par rapport au reste du balai.

Le dispositif de solidarisation 11 comprend une première partie 12 et une deuxième partie 13 reliées mécaniquement l'une à l'autre par un moyen de fixation ou solidarisation amovible. La première partie 12 présente une section globalement complémentaire à la section du support 4, du dispositif de canalisation 6 et du déflecteur 9. Ainsi, ces trois composants pénètrent dans un logement 14 pratiqué dans la première partie 12.

La figure 2 montre la manière dont est fixée la première partie 12 sur le support 4. Pour ce faire, la première partie 12 comprend un moyen de verrouillage 15 de la première partie 12 sur le support 4. Ce moyen de verrouillage prend notamment la forme d'une languette 16 pratiquée à la périphérie d'une cavité 17 qui reçoit une extrémité du support 4. Cette cavité 17 est formée dans le volume interne de la première partie 12 est présente une forme complémentaire à la forme de l'extrémité de la baguette ou vertèbre formant le support. En pratique, cette cavité forme un rectangle dans laquelle coulisse l'extrémité du support. La languette 16 est formée d'un seul tenant avec la première partie 12 et s'étend selon un plan qui croise la cavité 17. Autrement dit, un bout 18 de la languette dépasse dans le volume délimité par la cavité 17. On notera que cette languette 16 est flexible de sorte à se déformer pour laisser passe l'extrémité du support 4 quand celle-ci est insérée dans la cavité 17. La languette 16 coopère avec une encoche 19 pratiquée sur le côté de l'extrémité du support. Une fois que la languette 16 prend place dans l'encoche 19, le bout 18 forme une butée contre une tranche de l'encoche de sorte à fixer mécaniquement la première partie 12 sur le support 4.

La première partie 12 comprend encore une zone de réception 20 de la lame. Cette zone de réception 20 est notamment formée par deux plats 21a et 21b qui délimitent une zone de passage des gorges 5a et 5b de la lame.

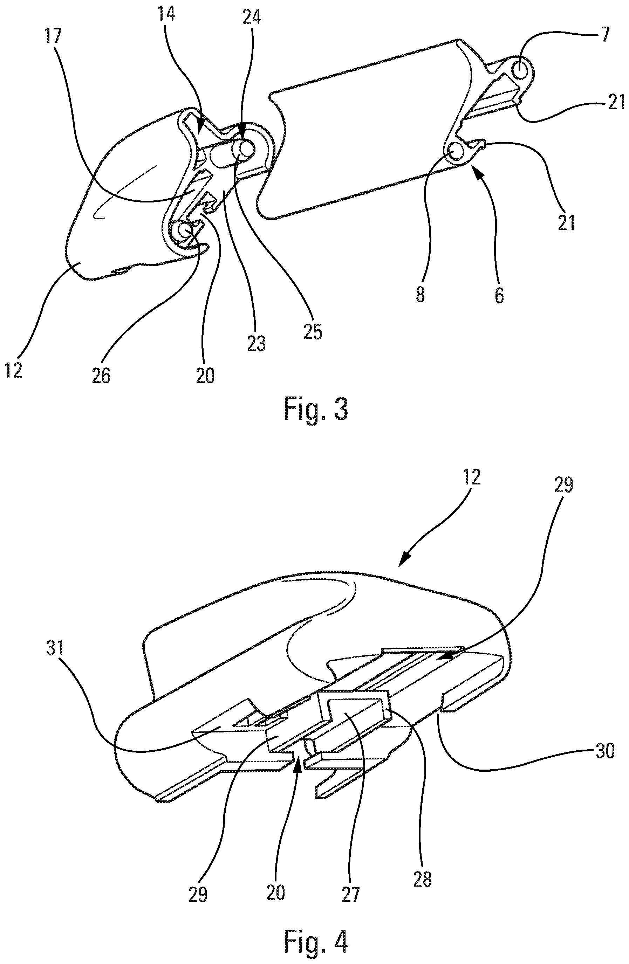

La figure 3 montre en éclaté la première partie 12 du dispositif selon l'invention et le dispositif de canalisation du fluide 6. La pièce rassemblant les deux conduits 7 et 8 avec le déflecteur d'air 9 présente deux bords de retenue 21 et 22 de la pièce sur le support. Chaque bord de retenue a pour fonction d'agripper le support 4 pour assurer la liaison mécanique entre la pièce et de support.

Le ou les bords de retenue 21 et 22 sont moulés dans le même matériau et en même temps que sont moulés le dispositif de canalisation de liquide 6 et le déflecteur d'air 9. Ces bords de retenue 21 et 22 s'étendent parallèlement au plan du support selon une direction opposée de l'un par rapport à l'autre. Ces bords de retenue prennent naissance le long de chaque conduit 7 et 8.

La première partie 12 présente le logement 14 délimité par la paroi externe de la première partie. Ce logement 17 présente un fond 23 qui forme butée à l'introduction du dispositif de canalisation du fluide. La cavité 17 et la zone de réception 20 prennent naissance à partir de ce fond 23.

Un exemple de réalisation d'un moyen d'obturation 24 selon l'invention est représenté sur cette figure. Ce moyen d'obturation 24 a pour fonction de boucher ou fermer le dispositif de canalisation du fluide 6. Pour ce faire, la première partie comprend un téton 25 et 26 en face de chaque conduit 7 et 8. Ces tétons sont des excroissances tubulaires qui s'étendent selon un axe parallèle à l'axe longitudinal du balai et confondu avec l'axe dans lequel s'étend le conduit concerné. Le diamètre extérieur de ces tétons est légèrement supérieur au diamètre intérieur du conduit respectif. Comme le matériau constitutif des conduits 7 et 8 est flexible, ces derniers se déforment pour s'emmancher sur les tétons 25 ou 26 et ainsi garantir une étanchéité du liquide. On notera enfin que l'extrémité libre de chaque téton 25 et 26 présente un chanfrein qui facilite l'introduction du téton dans le conduit.

Le moyen d'obturation 24 peut prendre d'autres formes de réalisation pour autant qu'il assure l'étanchéité du dispositif de canalisation du liquide aux extrémités du balai. A titre d'exemple, le dispositif d'obturation peut être formé par un appui plan du bout des conduites 7 ou 8 directement contre le fond 23.

La figure 4 montre le dessous de la première partie 12 constituant le dispositif de solidarisation selon l'invention. On constate que la zone de réception 20 de la lame s'étend selon l'axe longitudinal au moyen d'une paroi 27 bordée de chaque côté par un flan latéral 28 ou 29. Cette paroi 27 et les flans latéraux 28 et 29 bloquent ainsi un débattement latéral de la lame quand celle-ci est enfilée dans la zone de réception 20.

La partie inférieure de la première partie 12 comprend une découpe 29 qui sert de région pour accueillir la deuxième partie du dispositif de solidarisation selon l'invention. Autrement dit, la deuxième partie s'insère dans la découpe 29 de sorte à s'inscrire dans le volume de la première partie 12 et ne pas dépasser de cette dernière.

La découpe 29 est complétée par deux déformations latérales 30 et 31 avec lesquelles la deuxième partie coopère de sorte à être bloquer en translation vis-à-vis de la première partie 12.

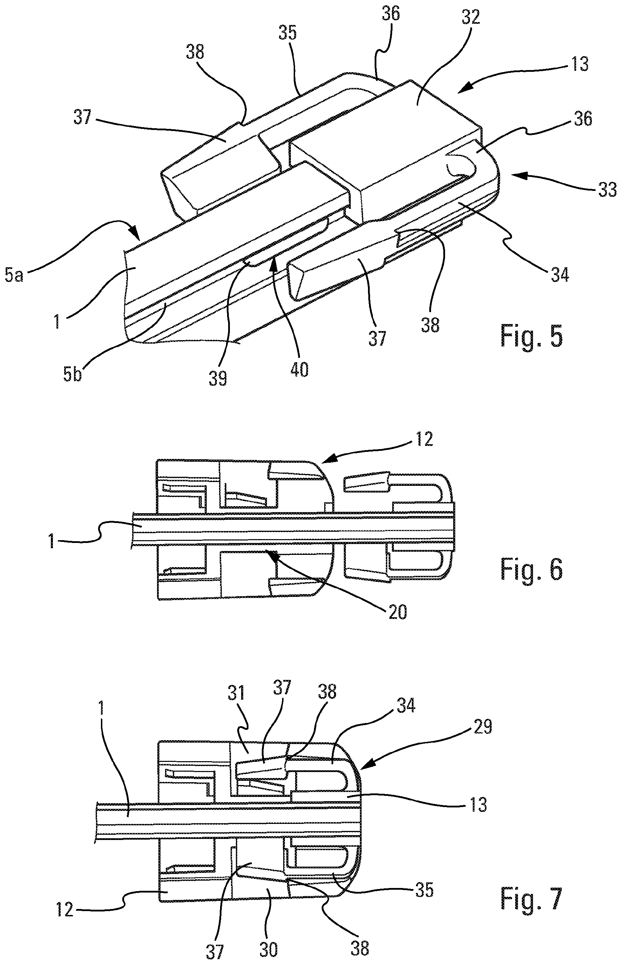

La figure 5 montre en détail un exemple de réalisation de la deuxième partie 13. Cette deuxième partie 13 comprend un corps 32 dans ou sur lequel la lame 1 est montée ou enfilée. Cette liaison mécanique est opérée au moyen d'un évidement pratiqué dans le corps 12 et bordé latéralement par deux nervures qui coopèrent chacune avec une gorge 5a ou 5b de la lame 1. La forme de l'évidement est ainsi complémentaire de la zone de fixation 3 de la lame 1.

Le moyen de fixation amovible 33 est fabriqué sur la deuxième partie 13. ce moyen de fixation est qualifié d'amovible en ce sens qu'il est opérable manuellement par l'utilisateur pour fixer ou extraire la deuxième partie 13 par rapport à la première partie 12. Ce moyen de fixation amovible comprend deux bras flexibles 34 et 35 qui prennent chacun naissance latéralement sur le corps 12. On comprend donc que ces bras s'étendent selon un plan parallèle au plan dans lequel s'étend le support 4. Chaque bras comprend une première portion 36 qui s'étend perpendiculairement à l'axe longitudinal puis une seconde portion 37 reliée à la première portion 36 qui s'étend parallèlement à l'axe longitudinale. La seconde portion 37 s'étend donc selon une direction perpendiculaire à la direction d'extension de la première portion 36.

L'extrémité libre de chaque bras 34 et 35 comprend un moyen de retenue 37 qui présente une arête 38. Chaque moyen de retenue 37 coopère avec la déformation latérale 30 ou 31 pratiquée dans la première partie du dispositif. L'arête 38 vient ainsi former une butée qui retient la deuxième partie 13 par rapport à la première partie 12 de sorte à solidariser la deuxième partie vis-à-vis de la première partie.

L'extrémité de l'un au moins des bras 34 ou 35 comprend une excroissance 39 qui se loge dans un trou 40 pratiqué dans la lame. L'excroissance 39 est par exemple formée par un plat qui prend naissance sur un moyen de retenue 37. Ce plat s'étend dans un plan parallèle au plan d'extension du support et pénètre dans le trou 40. Ce dernier est réalisé dans le plan des deux gorges 5a et 5b. Cette coopération entre l'excroissance 39 et le trou 40 relie mécaniquement la deuxième partie 13 avec la lame 1.

La figure 6 montre une phase d'insertion ou d'extraction de la lame 1 dans le balai d'essuyage, et plus particulièrement dans la première partie 12. La lame 1, équipée de la deuxième partie 13 du dispositif selon l'invention, coulisse dans la zone de réception 20 de la première partie 12. A ce stade, la lame 1 n'est pas solidarisée par rapport au balai et le mouvement de translation entre la lame 1 et la première partie 12 est libre.

La figure 7 illustre le dispositif de solidarisation selon l'invention dans un état où la deuxième partie 13 est solidarisée à la première partie 12 par le moyen de fixation amovible 33. Le moyen de retenue 37 formé sur chaque bras 34 et 35 coopère avec la déformation latérale 30 ou 31 formée sur les cotés de la première partie 12. Les bras 34 et 35 étant conformés pour autoriser un déplacement des moyens de retenue 37, ceux-ci se déplace en direction de la lame 1 lors de l'introduction de la deuxième partie 13 dans la première partie 12. On constate que les déformations latérales 30 et 31 offre un espace de dégagement dans le plan du support et en direction de la lame 1 pour autoriser le mouvement des moyens de retenue 37. Les bras 34 et 35 sont quant à eux intégralement logés dans la découpe 29 de sorte que la deuxième partie 13 est majoritairement cachée par la première partie 12.

Si l'utilisateur souhaite remplacer la lame 1, il presse les deux moyens de retenue 37 en direction de la lame de sorte à dégager l'arête 38 de la déformation latérale 30 ou 31 concerné. La translation de la deuxième partie 13 par rapport à la première partie 12 est ainsi libérée et le mouvement d'extraction de la lame peut être engagé en tirant sur la deuxième partie 13, cette dernière entraînant avec elle la lame 1 par le biais de la coopération de l'excroissance 39 avec le trou 40.

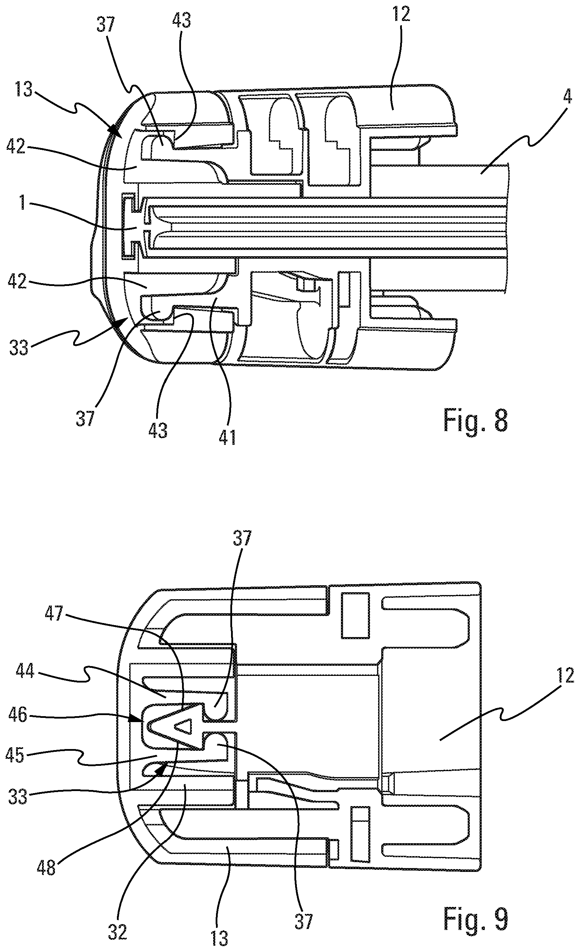

La figure 8 illustre une variante de réalisation du moyen de fixation amovible 33 entre la première partie 12 et la deuxième partie 13. Le moyen amovible est ici formé par au moins un doigt flexible 41 issu de la première partie 12. Dans cet exemple de réalisation, la première partie 12 comprend deux doigts flexible 41. Ce doigt flexible s'étend dans le plan du support 4 et dans vers l'extrémité de la première partie opposée au logement 14 qui reçoit le dispositif de canalisation de liquide. La flexibilité de ce doigt est obtenue par le matériau plastique constituant la première partie 12 combiné à l'épaisseur de ce doigt qui confère des propriétés flexibles. L'extrémité libre de chaque doigt 41 est terminée par un moyen de retenue 37 qui prend ici la forme par exemple d'un demi-cercle. La deuxième partie 13 comprend deux déformations extrémales 42 qui reçoivent chacune le doigt flexible 41. La forme en demi-cercle du moyen de retenue 37 forme butée et blocage de la première partie 12 par rapport à la deuxième partie 13 par coopération entre le moyen de retenue 37 et une arête 43 qui délimite chaque déformation extrémale 42, en formant un épaulement.

La figure 9 montre une deuxième variante de réalisation du moyen de fixation amovible 33. Alors que dans la variante des figures 5 à 7, le moyen de fixation amovible est formé par des bras qui dépassent latéralement du corps 12, le moyen de fixation amovible est ici inscrit ou compris dans la largeur du corps 32. On comprend donc que le moyen flexible illustré sur la figure 9 ne dépasse pas latéralement du corps 12 selon le plan du support.

Le moyen de fixation amovible 33 comprend ici deux bras flexibles 44 et 45 au bout desquelles est pratiqué un moyen de retenue 37 qui prend la forme d'un demi-cercle. Les deux bras 44 et 45 enserrent un moyen de blocage 46 formé sur la paroi inférieure de la première partie 12. Ce moyen de blocage comprend notamment deux pans obliques 47 et 48 qui tendent à écarter l'un de l'autre les bras flexibles 44 et 45 lors de l'introduction de la deuxième partie 13 dans la première partie 12.

Lorsque la deuxième partie 13 est en position fixée sur la première partie 12, les moyens de retenue 37 sont en appuis contre des arêtes contigües aux pans obliques et délimitant le moyen de blocage 46.

Dans les variantes exposées ci-dessus, on notera que la première partie 12 forme un ensemble unitaire moulé à partir d'un même matériau plastique. Il en va de même pour la deuxième partie 13 qui peut être moulée de sorte à former une pièce d'un seul tenant.

## Revendications

1. Dispositif de solidarisation (11) entre une lame (1) et un support (4) constitutifs d'un balai d'essuyage, comprenant un première partie (12) apte à être fixée sur le support (4) et une deuxième partie (13) apte à être fixée sur la lame (1), la première partie (12) et la deuxième partie (13) sont reliées par un moyen de fixation amovible (33), la deuxième partie (13) comprenant un corps (32) solidaire de la lame (1), ledit dispositif de solidarisation (11) étant **caractérisé en ce que** la première partie (12) comprend au moins un moyen d'obturation (24) apte à boucher au moins un dispositif de canalisation d'un liquide (6) constitutif du balai, **en ce que** le moyen de fixation amovible (33) est constitué par deux bras flexibles (34, 35) qui prennent naissance sur le corps (32) et au bout desquels est formé un moyen de retenue (37) sur la première partie (12), **et en ce qu'**au moins un bras (34, 35) présente une excroissance (39) qui se loge dans un trou (40) pratiqué dans la lame (1).

2. Dispositif selon la revendication 1, dans lequel la lame (1) et le support (4) s'étendent selon un axe longitudinal du balai d'essuyage, le dispositif de canalisation du liquide (6) étant constitué par deux conduits (7, 8) disposés de part et d'autre du support (4).

3. Dispositif selon la revendication 2, dans lequel les conduits (7, 8) sont formés de manière unitaire avec un déflecteur d'air (9).

4. Dispositif selon l'une quelconque des revendications 1 à 3, dans lequel la première partie (12) comprend un logement (14) qui reçoit une extrémité du dispositif de canalisation du liquide (6).

5. Dispositif selon l'une quelconque des revendications précédentes, dans lequel le moyen d'obturation (24) comprend un téton (25, 26) qui pénètre à l'intérieur du dispositif de canalisation du liquide (6) pour le boucher.

6. Dispositif selon l'une quelconque des revendications précédentes, dans lequel la première partie (12) comprend un moyen de verrouillage (15) de cette première partie (12) sur le support (4).

7. Dispositif selon l'une quelconque des revendications précédentes, dans lequel la première partie (12) comprend deux déformations (30, 31, 42) avec lesquelles chaque moyen de retenue (37) coopère.

8. Dispositif selon l'une quelconque des revendications précédentes, dans lequel le moyen de fixation amovible (33) est formé par au moins un doigt flexible (41) qui débouche à une extrémité de la première partie (12) et qui coopère avec une arête (43) pratiquée dans la deuxième partie (13).

9. Balai d'essuyage comprenant une lame (1) et un support (4) et dans lequel la lame (1) est solidarisée sur le support (4) par un dispositif selon l'une quelconque des revendications précédentes.

## Patentansprüche

1. Verbindungsvorrichtung (11) zwischen einem Blatt (1) und einem Träger (4), die einen Wischer bilden, umfassend einen ersten Teil (12), der geeignet ist, auf dem Träger (4) befestigt zu werden, und einen zweiten Teil (13), der geeignet ist, auf dem Blatt (1) befestigt zu werden, wobei der erste Teil (12) und der zweite Teil (13) durch ein lösbares Befestigungsmittel (33) verbunden sind, wobei der zweite Teil (13) einen mit dem Blatt (1) verbundenen Körper (32) umfasst, wobei die Verbindungsvorrichtung (11) **dadurch gekennzeichnet ist, dass** der erste Teil (12) mindestens ein Verschlussmittel (24) umfasst, das geeignet ist, mindestens eine Flüssigkeitsleitvorrichtung (6), die Bestandteil des Wischers ist, zu verschließen, dass das lösbare Befestigungsmittel (33) von zwei flexiblen Armen (34, 35) gebildet ist, die vom Körper (32) ausgehen, und an deren Ende ein Haltemittel (37) auf dem ersten Teil (12) ausgebildet ist, und dass mindestens ein Arm (34, 35) eine Ausstülpung (39) aufweist, die in einem in dem Blatt (1) vorgesehenen Loch (40) angeordnet ist.

2. Vorrichtung nach Anspruch 1, bei der sich das Blatt (1) und der Träger (4) entlang einer Längsachse des Wischers erstrecken, wobei die Flüssigkeitsleitvorrichtung (6) von zwei Leitungen (7, 8) gebildet ist, die beiderseits des Trägers (4) angeordnet sind.

3. Vorrichtung nach Anspruch 2, bei der die Leitungen (7, 8) einstückig mit einem Luftleitblech (9) ausgebildet sind.

4. Vorrichtung nach einem der Ansprüche 1 bis 3, bei der der erste Teil (12) eine Aufnahme (14) umfasst, die ein Ende der Flüssigkeitsleitvorrichtung (6) aufnimmt.

5. Vorrichtung nach einem der vorhergehenden Ansprüche, bei der das Verschlussmittel (24) einen Zapfen (25, 26) umfasst, der in die Flüssigkeitsleitvorrichtung (6) eindringt, um sie zu verschließen.

6. Vorrichtung nach einem der vorhergehenden Ansprüche, bei der der erste Teil (12) ein Verriegelungsmittel (15) dieses ersten Teils (12) auf dem Träger (4) umfasst.

7. Vorrichtung nach einem der vorhergehenden Ansprüche, bei der der erste Teil (12) zwei Verformungen (30, 31, 42) umfasst, mit denen jedes Haltemittel (37) zusammenwirkt.

8. Vorrichtung nach einem der vorhergehenden Ansprüche, bei der das lösbare Befestigungsmittel (33) von mindestens einem flexiblen Finger (41) gebildet ist, der an einem Ende des ersten Teils (12) mündet und mit einer in dem zweiten Teil (13) vorgesehenen Kante (43) zusammenwirkt.

9. Wischer, umfassend ein Blatt (1) und einen Träger (4), wobei das Blatt (1) auf dem Träger (4) durch eine Vorrichtung nach einem der vorhergehenden Ansprüche befestigt ist.

## Claims

1. Device (11) for securing between a blade (1) and a support (4) which constitute a wiper, comprising a first part (12) which can be attached on the support (4), and a second part (13) which can be attached on the blade (1), the first part (12) and the second part (13) being connected by a removable attachment means (33), the second part (13) comprising a body (32) which is integral with the blade (1), said securing device (11) being **characterized in that** the first part (12) comprises at least one blocking means (24) which can plug at least one liquid-feeding device (6) which the wiper comprises, **in that** the removable attachment means (33) is constituted by two flexible arms (34, 35) which originate on the body (32), and at the end of which a means (37) for retention on the first part (12) is formed, and **in that** at least one arm (34, 35) has a protuberance (39) which is accommodated in a hole (40) provided in the blade (1).

2. Device according to Claim 1, wherein the blade (1) and the support (4) extend according to a longitudinal axis of the wiper, the liquid-feeding device (6) being constituted by two ducts (7, 8) arranged on both sides of the support (4).

3. Device according to Claim 2, wherein the ducts (7, 8) are formed integrally with an air deflector (9) .

4. Device according to any one of Claims 1 to 3, wherein the first part (12) comprises a receptacle (14) which receives an end of the liquid-feeding device (6).

5. Device according to any one of the preceding claims, wherein the blocking means (24) comprises a stud (25, 26) which penetrates inside the liquid-feeding device (6) in order to plug it.

6. Device according to any one of the preceding claims, wherein the first part (12) comprises a means (15) for locking this first part (12) on the support (4).

7. Device according to any one of the preceding claims, wherein the first part (12) comprises two deformations (30, 31, 42), with which each means (37) for retention co-operates.

8. Device according to any one of the preceding claims, wherein the removable attachment means (33) is formed by at least one flexible finger (41) which extends from an end of the first part (12) and co-operates with a ridge (43) provided in the second part (13).

9. Wiper comprising a blade (1) and a support (4), and wherein the blade (1) is secured on the support (4) by a device according to any one of the preceding claims.
